# EUROPEAN PATENT SPECIFICATION

(11) **EP 3 642 481 B1**
(45) Date of publication and mention of the grant of the patent: **12.05.2021**
(21) Application number: 18734424.7
(22) Date of filing: 14.06.2018
(51) Int. Cl.: F03D 17/00

(54) **A METHOD FOR DETERMINING WIND TURBINE BLADE EDGEWISE LOAD RECURRENCE**
VERFAHREN ZUR BESTIMMUNG VON WINDTURBINENSCHAUFELKANTENWEISER LASTWIEDERKEHR
PROCÉDÉ DE DÉTERMINATION DE RÉCURRENCE DE CHARGE DANS LE SENS DE LA TRAÎNÉE DE PALE D'ÉOLIENNE

(30) Priority: 20.06.2017 DK PA201770481
(43) Date of publication of application: 29.04.2020
(73) Proprietor: Vestas Wind Systems A/S, 8200 Aarhus N (DK)
(72) Inventor: BRØDSGAARD, Martin, 8382 Hinnerup (DK); SØRENSEN, Søren Hove, 8382 Hinnerup (DK)
(74) Representative: Vestas Patents Department
(86) International application number: PCT/DK2018/050139
(87) International publication number: WO 2018/233787

(56) References cited:
- EP-A2- 2 626 551
- GB-A- 2 459 726
- US-A1- 2013 272 874
- US-A1- 2015 211 969

## Description

### FIELD OF THE INVENTION

This application relates to a method for determining an edgewise load recurrence signal, in particular an edgewise load recurrence signal acting on a wind turbine blade.

### BACKGROUND OF THE INVENTION

Local stresses in a component of a wind turbine may be assumed to relate to the loading on the relevant component with the stress progressively increasing with increased loading. Accordingly, the strength of a structural component may be defined in terms of an ultimate load that causes failure. With a known loading, the suitability of the structure can be assessed by comparing the extreme values of the loading (optionally with an additional safety margin) with the ultimate load resistance for the material and construction of the structural component. As set out in Annex F of the IEC International Standard for Wind Turbines IEC 61400-1:2005(E), loading in wind turbines depends on the turbulent wind flow, which will differ over the variety of wind conditions, and so it is necessary to statistically analyse the extreme values of the loading on a component and to extrapolate to arrive at an appropriate characteristic load corresponding to the exceedance probability.

Accordingly, known methods for determining an edgewise load recurrence (e.g. the risk corresponding to the likelihood of an event (i.e. a measurement of a given edgewise load) occurring within a given time period) of a wind turbine blade typically comprise performing a load extrapolation of an edgewise load by fitting the maximum measured load data to a distribution function, such as a lognormal distribution function, and then statistically extrapolating from these loads. Part F.1 of annex F of the IEC International Standard for Wind Turbines IEC 61400-1:2005(E) describes an example of such a method in further detail.

The inventors have appreciated that it would be desirable to provide an improved method for determining an edgewise load recurrence of a wind turbine blade that can be used in verification of design loads and/or alerting / control systems relating to one or more wind turbines.

### SUMMARY OF THE INVENTION

The invention is defined in the independent claims to which reference should now be directed. Advantageous features are set out in the dependent claims.

In a first aspect of the disclosure, a method for determining an edgewise load recurrence signal acting on a wind turbine blade is described. The method according to the first aspect of the disclosure comprises obtaining, from at least one sensor, a plurality of measures of a parameter for deriving an edgewise load signal acting on the wind turbine blade and deriving the edgewise load signals acting on the wind turbine blade based on each obtained measure of the parameter. The method then comprises filtering the edgewise load signals to separate out frequency content of one or more edgewise components of the edgewise load signal to provide edgewise component load signals and identifying a peak edgewise component load signal of the edgewise component load signals derived from measures obtained within a given period of time. A plurality of peak edgewise component load signals, identified from a plurality of periods of time, are then fitted to a distribution function; and the fitted peak first edgewise components is extrapolated to estimate an edgewise load recurrence.

Advantageously, this method provides an improved method for determining an edgewise load recurrence that is able to arrive at an edgewise load recurrence value determined with a given accuracy at an improved speed and/or with a reduced number of data points required. Optionally, the edgewise load recurrence may be the recurrence for a given edgewise load. Alternatively, the edgewise load recurrence may be the estimated edgewise load for a given recurrence period.

In this regard it is mentioned that the edgewise load recurrence is a term generally understood in the art. The edgewise load recurrence can be expressed in different ways, e.g. as the likelihood of an edgewise load occurring within a given time period, such as within a given period of time of a measurement series. In particular, the edgewise load recurrence may be understood as a parameter, such as the extreme edgewise load, and where the parameter have a given exceedance probability within the observation period T.

Optionally, the method may further comprise filtering the edgewise load signals to separate out a derived gravitational component of each edgewise load signal and correlating the edgewise load recurrence with the gravitational component of the edgewise load signal and adding the correlated edgewise load recurrence to the gravitational component to determine an absolute load recurrence. This advantageously, determines an absolute load recurrence at a given accuracy with improved speed and/or a fewer number of data points required. This absolute load signal may then be used for alerting, control or improved modelling of one or more wind turbines.

Optionally, the method determines an extreme load recurrence by adding the edgewise load recurrence to a maxima of the gravitational component of the edgewise load signal. This advantageously, determines a maximum load recurrence at a given accuracy with improved speed and/or a fewer number of data points required. This maximum load signal may then be used for alerting, control or improved modelling of one or more wind turbines.

Optionally, the first edgewise component may be a first edgewise Eigen mode of the edgewise load signal and the step of filtering the edgewise load signal may comprise using either a band stop filter or a band pass filter, in particular a butter-worth filter.

Optionally, the method may comprise obtaining, from a sensor configured to measure a blade speed of the at least one wind turbine blade, a blade speed signal; and wherein the estimated edgewise load recurrence is a function of the blade speed. Advantageously, this incorporates wind turbine blade resonance based rotor frequency into the model.

Optionally, the method may comprise updating the distribution function based on the estimated edgewise load recurrence using Bayesian inference. This advantageously improves the accuracy of the distribution function and thus improves the speed and accuracy of the fitting and extrapolation to determine the edgewise load signal.

Optionally, the method may further comprise determining an expected gravitational component of the edgewise load signal based on a known weight of the at least one blade and a pitch angle of the at least one blade; comparing the expected gravitational component and the filtered gravitational component of the edgewise load signal; and determining a calibration offset of the at least one sensor. This advantageously enables the method to periodically re-calibrate the sensor during use of the corresponding wind turbine blade and without the need for downtime or other servicing intervention.

Optionally, the at least one sensor, which is configured to measure the parameter for deriving the edgewise load signal, is further configured to measure a bending movement at the root of the at least one wind turbine blade. This advantageously provides a simple and effective means for deriving the edgewise load signal.

Optionally, the method further comprises outputting a signal, based on the estimated edgewise load recurrence, to a wind turbine monitoring system. The wind turbine monitoring system may advantageously utilise this signal, for example to feed back control information to the wind turbine, alerting information to an operator or to update and store data for design modelling and verification.

Optionally, the wind turbine monitoring system is configured to monitor the condition of a fleet of wind turbines based, at least in part, on the output signal. Optionally, the wind turbine monitoring system is further configured to output a load exceedance warning signal based, at least in part, on the output signal. This advantageously alerts a user or controller to the increased / abnormal load conditions that the wind turbine blade, and thus wind turbine, are operating under, which may then cause further action from the user / controller.

Optionally, the wind turbine monitoring system is further configured to control an operational variable of one or more wind turbines based, at least in part, on the output signal. This advantageously enables the wind turbine monitoring system to adapt the operational state of the wind turbine and at least the relevant wind turbine blade, for example to protect the structural integrity and/or estimated service life of the wind turbine.

According to a second aspect of the disclosure, a controller for a wind turbine having at least one wind turbine blade which in turn has at least one sensor configured to measure a parameter for deriving an edgewise load signal of the at least one wind turbine blade is described. The controller of the second aspect of the disclosure is configured to cause any method of the first aspect of the disclosure to be implemented in the controller. This advantageously provides an improved controller for a wind turbine that is able to determine an edgewise load recurrence value with a given accuracy at an improved speed and/or with a reduced number of data points required and may perform control steps in response to this determination. Optionally, the controller for a wind turbine may be a part of the wind turbine itself.

According to a third aspect of the disclosure, a computer program is described that, when executed on a wind turbine controller, causes the wind turbine controller to carry out any method of the first aspect of the disclosure.

### BRIEF DESCRIPTION OF THE DRAWINGS

Embodiments of the invention will now be described, by way of example only, and with reference to the accompanying drawings, in which:
Figure 1 is a schematic view of a wind turbine;
Figure 2 is an exemplary plot of measured edgewise loads that may be used in prior art methods to estimate the 50 year recurrence of the design loads;
Figure 3 is an illustrative plot of an exceedance probability extrapolation fit to the edgewise load according to a prior art method;
Figure 4 is a flowchart illustrating a method and computer program product for determining an edgewise load recurrence signal acting on a wind turbine blade;
Figure 5 is an illustrative plot showing the respective edgewise loading as a function of the azimuth blade angle as measured and then with the respective gravity and first edgewise components separated out; and
Figure 6 is an illustrative plot of an exceedance probability extrapolation fit to the first edgewise load component according to the method of the present invention.

### DETAILED DESCRIPTION

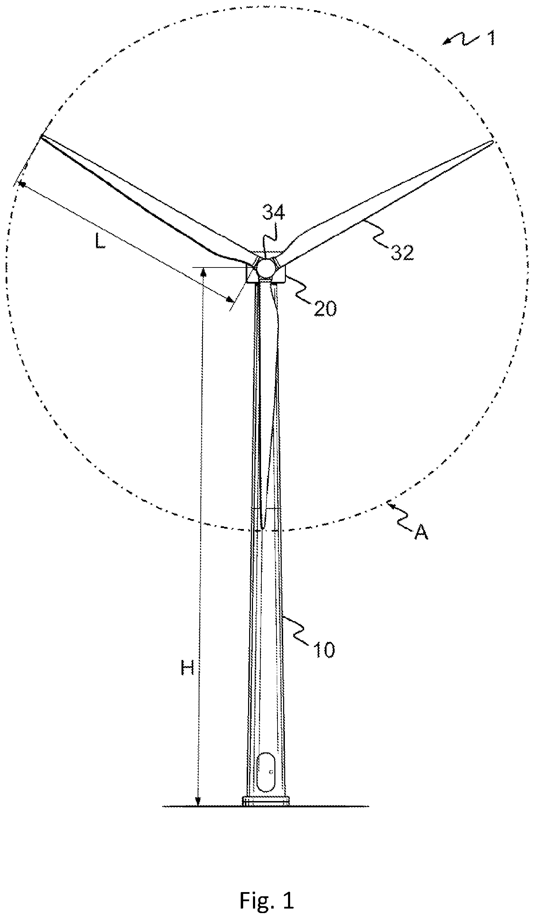

Figure 1 illustrates a large wind turbine 1, comprising a tower 10, a wind turbine nacelle 20 positioned on top of the tower 10 and a rotor 30. The illustrated wind turbine rotor 30 comprises three wind turbine blades 32 and a hub 34. The hub 34 is located at a height H above the base of the tower and each of the three wind turbine blades 32 are mounted to the hub. Whilst the wind turbine rotor 30 is shown as having three wind turbine blades, the wind turbine rotor 30 could comprise a different number of blades 32. The blades 32 each have a length L.

The wind turbine blades 32 define a swept area A, which is the area of a circle delineated by the rotating blades 32. The swept area dictates how much of a given air mass is intercepted by the wind turbine 1 and, thus, influences the power output of the wind turbine 1 and the forces and bending moments experienced by the components of the turbine 1 during operation. The turbine may stand onshore, as illustrated, or offshore. In the latter case the tower will be connected to a monopile, tripod, lattice or other foundation structure, and the foundation could be either fixed or floating.

The hub 34 is typically connected to the nacelle 20 through a low speed shaft (not shown) extending from the front of the nacelle 20. The low speed shaft drives a gearbox (also not shown) which steps up the rotational speed and, in turn, drives an electrical generator within the nacelle 20 for converting the energy extracted from the wind by the rotating blades 32 into electrical power output. In some embodiments, the wind turbine rotor 30 may be directly coupled to the electrical generator, i.e. direct-drive turbines.

Each wind turbine blade 32 has a root portion, which is generally circular in cross section, that is connected to the central hub 34. Each wind turbine blade 32 has a blade tip at the opposite end of the wind turbine blade to the root. The direction along the blade between the root and the blade tip is usually known as the flapwise or spanwise direction and corresponds to the axis of the blade length L mentioned above. In the lateral direction, substantially perpendicular to the spanwise direction, is the edgewise direction of the blade 32. The wind turbine blade 34 extends along this edgewise direction, sometimes referred to as the chord-wise direction, between a leading edge and a trailing edge of the blade.

Air flow around a wind turbine blade 32 may excite the blade and cause the blade to oscillate in the flapwise and/or edgewise directions. The resulting edgewise loading at any given point along the length of the blade will be the sum of loads between the given point and the tip of the wind turbine blade 32. Therefore, the edgewise bending moment of the wind turbine blade will be greatest at the root portion of the blade. For this reason, loading measurements and prediction estimates will typically refer to the bending moment at the root of the wind turbine blade. However, it will of course be appreciated that other measurements of the load on the wind turbine blade 32 could be used.

Whilst flapwise oscillations can be relatively easy to monitor for and to damp against, management of edgewise oscillations are comparatively difficult. This is at least in part because the comparatively thin thickness profile of the blade offers little wind resistance to and self-damping against edgewise blade oscillations.

Accordingly, it is important that wind turbine blades 32 are designed with an accurate representation of the loading that the wind turbine blade can be expected to endure and that there is an accurate estimation of the recurrence of such design loads.

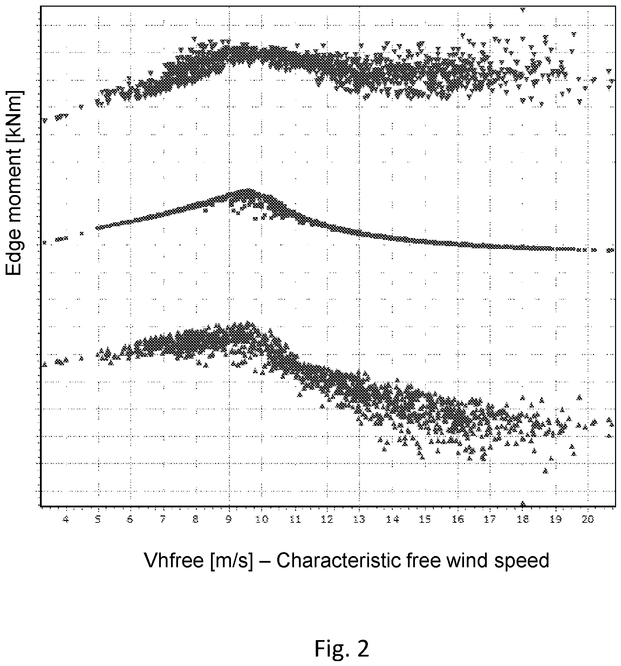

Figure 2 is an exemplary plot of the measured edgewise loads for a range of characteristic free wind speeds ranging from 4 m/s to 20 m/s. The upper plot profile shows the maximum measured edgewise loads obtained for a measurement series obtained for different wind speeds, i.e. the maximum measured edgewise load obtained for a given wind speed bin. The middle plot profile corresponding to the mean loading and the lower plot profile corresponding to the minimum loading obtained in the same way for each of the different wind speeds. As described in Annex F of the IEC 61400-1:2005(E) standard, to estimate a suitable characteristic load with a recurrence period of 50 years for the design of a given wind turbine component, such as a wind turbine blade 32, statistical analysis is carried out using the extreme values of the loading on the wind turbine blade 32.

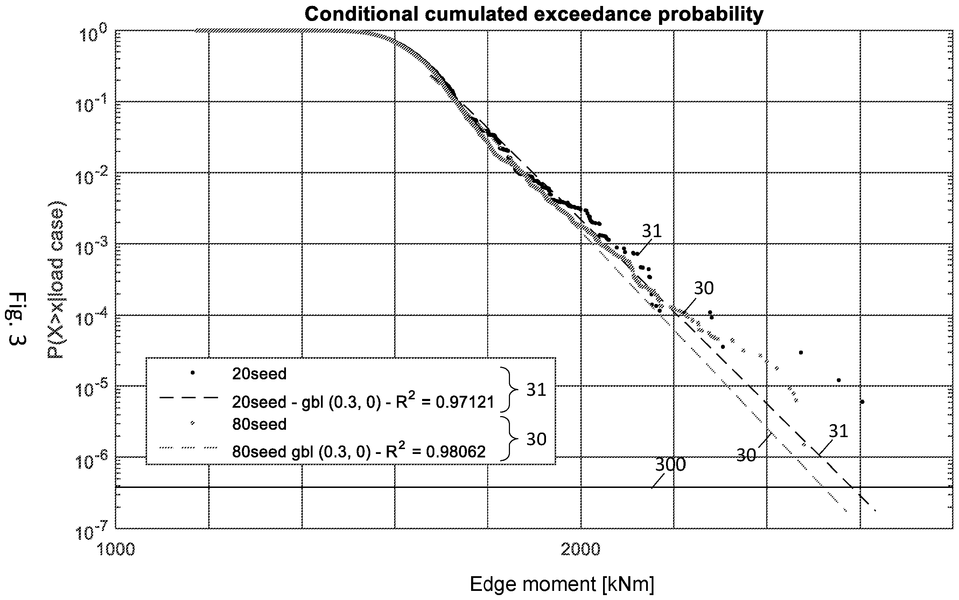

Figure 3 is an illustrative plot of an exceedance probability extrapolation fit to the edgewise load according to the prior art. In one of the plots shown in Figure 3, the exceedance probability was extrapolated using a so-called 20 seed data set, 31, and the other plot was extrapolated using a so-called 80 seed data set, 30, reference to 20 and 80 respectively does not refer to the number of data sets, instead they refer to that the 80 seed data set is based on four times the number of data points as the 20 seed data set. As can be seen from Figure 3, the 80 seed data set converges to the fit significantly quicker and more accurately than that of the 20 seed data set. This shows that the prior art methods require a large data set in order to be able to produce reliable results with a reduced error.

The data is obtained for 10 minutes data, and the edgewise load recurrence is the for a 50 year occurrence, that is the probability that a design load is measured with in the 10 minutes data, is 3.7×10⁻⁷, as shown with the solid line 300.

The applicant has appreciated that an improved method for predicting or estimating the recurrence of a design load on the edgewise root moment of a wind turbine blade may be achieved by combining statistical extrapolation of the edgewise load with further data processing by filtering the edgewise load signal. In particular, the applicant has appreciated that by filtering out the contribution of the gravitational component of the edgewise loading on the wind turbine blade 32 from the remaining edgewise eigenmode oscillation contribution, these two contributions to the edgewise load can be treated differently.

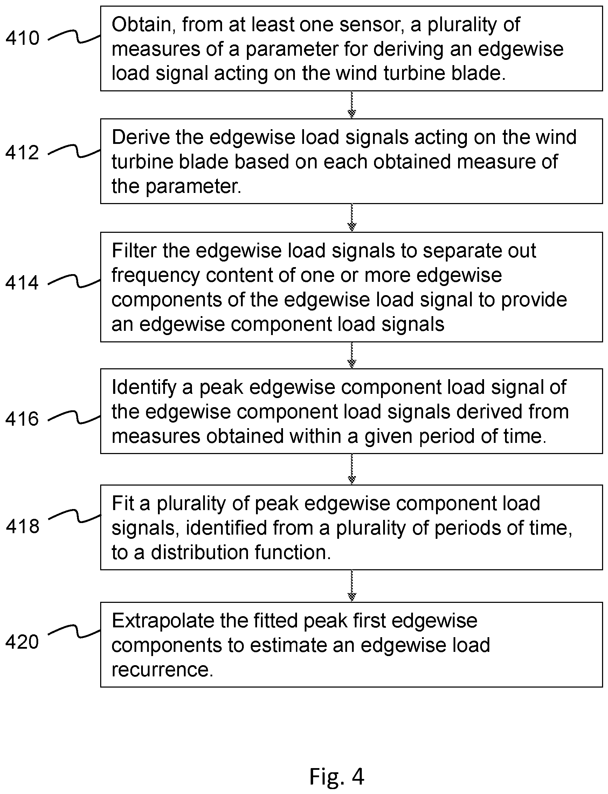

The applicant has appreciated that by including this filtering step in the method of the present disclosure, the method advantageously improves the subsequent fitting of the substantially stochastic edgewise component of the edgewise load to a probability function. Figure 4 is a flowchart illustrating a method and computer program product for determining an edgewise load recurrence signal acting on a wind turbine blade according to the present disclosure. Each block in the flowchart may represent a module comprising one or more executable computer instructions, or a portion of an instruction, for implementing the logical function specified in the block. The order of blocks in the diagram is only intended to be illustrative of an example. In alternative implementations, the logical functions illustrated in particular blocks may occur out of the order depicted in the figure. For example, two blocks shown as adjacent one another may be carried out simultaneously or, depending on the functionality, in the reverse order. Each block in the flowchart may be implemented in software, hardware or a combination of software and hardware.

In step 410, a plurality of measures of a parameter for deriving an edgewise load signal acting on the wind turbine blade are obtained from one or more sensors, this may e.g. be a 10 minutes measurement series, as is often used in wind turbine data handling. For example, one or more of the sensors may be a strain gauge, such as an optical strain gauge or an electronic strain gauge, where the measured parameter is the electrical resistance of the sensing component.

The edgewise load signals acting on the wind turbine blade may then be determined based on each obtained measure of the parameter in the normal manner, as set out at step 412. In step 414, the edgewise load signals are filtered to separate out frequency content of one or more edgewise components of the edgewise load signal to provide edgewise component load signal. For example, a band pass filter may be designed to be around the expected frequency of the relevant component or components, this may also be obtained by a band stop filter designed to be around the expected frequency of the gravitational component. The expected frequency may be determined based on the measured and/or known speed of rotation of the rotor and/or the individual wind turbine blade 32 of the wind turbine 1 at the time that the respective measurements were taken, and applied to the edgewise load determined from the measurements of a period of time. For example, this time period may be selected to be one minute long in order to aid the filtering.

In an alternative example, a band pass filter may be used around the expected frequency of the gravitational component. For example a butter-worth band pass filter with an edge frequency of around +/-0.15 Hz.

Once the gravitational component of the edgewise load signal has been removed by filtering, the peak value of the remaining edgewise component of the edgewise load for a further period of time is identified at step 416. This further period of time may also be one minute in duration, or the further period may be of another duration, such as ten minutes. The above steps are then repeated until a plurality of peak edgewise load signal components have been identified.

These identified peak edgewise component load signals for each of the further periods are then fitted to a distribution function at step 418. A variety of distribution functions may be selected, for example a least square method may be used to fit to a Weibull distribution. Alternatively, the fitting may use a combination of either the Gumbel distribution, the lognormal distribution or the Weibull distribution with either a least squares method, a maximum likelihood method (where the parameter values that maximise the probability of obtaining the sample values are determined), or a method of moments method (where the sample moment is set equal to the distribution moment and the distribution parameter is estimated using the sample moments).

Once the fitting has been completed in step 418, the fitted peak first edgewise components may be extrapolated in step 420 to estimate an edgewise load recurrence. This estimated edgewise load recurrence may be the characteristic extreme edgewise load with a recurrence period of 50 years, or alternatively the recurrence may be estimated for a given edgewise load.

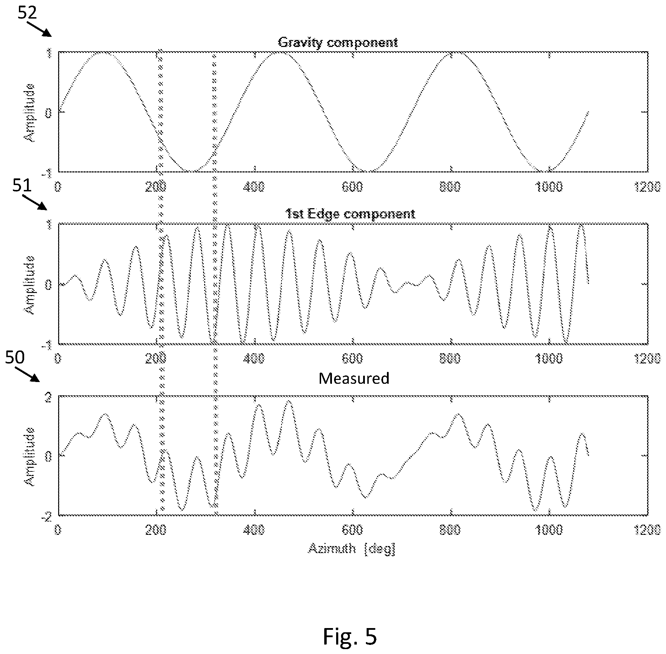

Figure 5 is an illustrative plot showing the gravity component and the 1^{st} edgewise component of the edgewise loading signal as a function of the azimuth blade angle as determined from the measurements, where the respective gravitational and first edgewise components are separated out by filtering of the measured signal. As can be seen from the portion within the vertical dotted lines spanning the three plots of Figure 5, a peak edgewise load will only occur where the gravity component peaks at the same time as the maximum amplitude of the more stochastic first edgewise component oscillation (the 1st edge component). Thus the loading due to the 1^{st} edgewise mode is masked by the loading due to the gravity. The loading from the edgewise vibration in a given mode is not apparently visible in the measured signal.

With reference to Fig. 4 and 5, a measured edgewise load signal is obtained 410, 412, here in the form of root moment signals in the edgewise direction. This signal is shown as the lower graph 50.

The edgewise load signals is filtered, 414, to separate out frequency content of one or more edgewise components of the edgewise load signal to provide edgewise component load signals. This is shown in the middle graph 51, where the measured signal of graph 50 is filtered with a band pass filter around the first edgewise mode of the blades.

In the filtered signal of graph 51, a peak edgewise component load signal is identified. In the given embodiment, this corresponds to finding the peak value of the edgewise component load signals within the a given period of time of the measured signal, here shown as a function azimuth angle. In this regard it is noted that there is a known correspondence between azimuth position and time due to the rotation of the rotor.

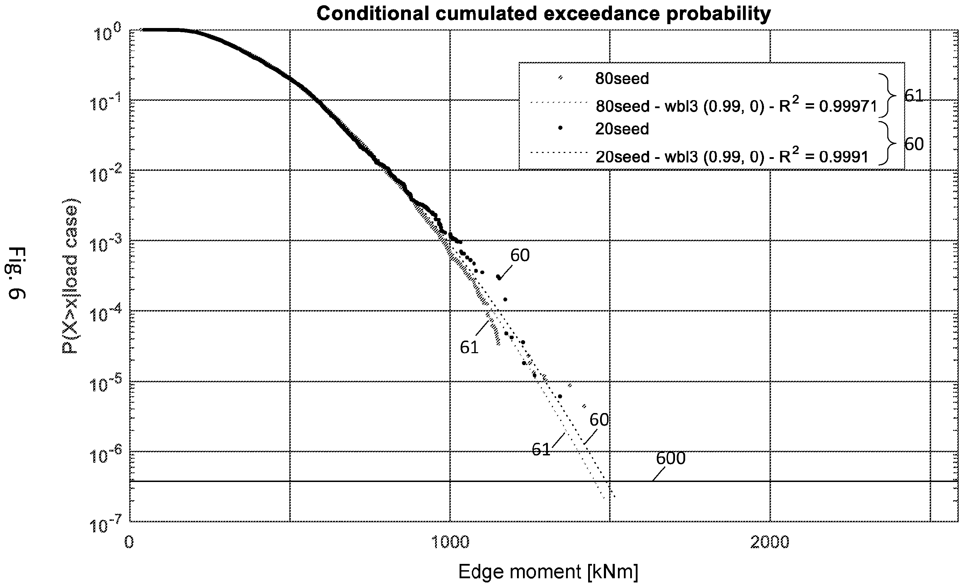

Additionally fitting and extrapolation steps, 418, 420, are performed based on the a plurality of peak edgewise component load signals. The result of this are dealt with in connection with Fig. 6.

Once the statistical processing has been performed to estimate the edgewise load of the first edgewise component for the desired recurrence period, the absolute or extreme load recurrence can be determined by adding the filtered gravitational component to the estimated edgewise load of the first edgewise component. This may be obtained by a corresponding process as explained above based on a filtered gravitational component to the estimated edgewise load of the first edgewise component. The filtered out gravitational component is shown in graph 52 on Fig. 5.

In the case of the extreme load recurrence, the maxima of the gravitational component may be added to the estimated edgewise load recurrence.

Accordingly, by performing the statistical fit and extrapolation on the first edgewise load component, rather than the absolute load component, the probability of capturing the most extreme peak load possible from the measured data is increased such that the resulting extreme edgewise load recurrence can be estimated more quickly and accurately.

Figure 6 is an illustrative plot of an exceedance probability extrapolation fit to the first edgewise load component according to the method of the present disclosure. Looking at the pair of plots for the 20 seed data set 61 and the 80 seed data set respectively 60, it can be seen that the difference in the rate of convergence between the two plots is greatly reduced in the method of the present disclosure. Again the reference to 20 seed data sets and 80 seed data sets respective, refer to data sets where the 80 seed data set contains four times the number of data points as the 20 seed data set.

As with Fig. 3, the data is obtained for 10 minutes data, and the edgewise load recurrence is the for a 50 year occurrence, that is the probability that a design load is measured with in the 10 minutes data, is 3.7×10⁻⁷, as shown with the solid line 600.

This shows that a faster, better and more accurate fit to the distribution may be achieved by filtering the edgewise load signal in the manner described above and then performing the fitting based on the maxima of the filtered first edgewise component measured and estimated in each observation period. Whilst the described method may reduce the number of data points to obtain a reasonable fit to the probability function and improve the robustness of the load extrapolation method, the number of extremes must still be sufficient to determine the type of distribution and to provide a reliable estimation of the behaviour of the tail of the distribution and the estimation will of course still improve further as the amount of collected data is increased.

One drawback of doing load extrapolation on measured data is that only a relatively small amount of data is typically available such that only a few extreme events are present. The convergence and robustness of the extrapolated edgewise load can therefore be further improved by using Bayesian inference statistical methods, where a prior distribution function is updated and refined as further data is collected. This prior distribution may be taken from another similar wind turbine, or alternatively the distribution estimated in the design phase may be used. In particular, during the first few months of operation after the installation of a new wind turbine 1, the method may use seed data from other wind turbines in an array of wind turbines, from wind turbines in a similar location, or from another fleet of wind turbines. This additional seed data will give the newly installed wind turbine a good starting point for the data to converge and to facilitate the determination of the characteristic load. In an alternative embodiment, a traditional frequentist approach may be used.

Since, in the present improved method, less data is needed to perform the fitting and to produce an estimate of the edgewise load recurrence, the estimation may be performed in an "online" mode whereby near real time load monitors collect and analyse the data using a short period to iteratively predict the maximum edgewise load during the lifetime of the wind turbine. This may be utilised to proactively react to situations where an abnormally high edgewise load is detected that modifies the resulting edgewise load recurrence.

Estimation of the recurrence of the edgewise design load may give an early warning of a design load exceedance before it actually occurs. In response to such a detection and estimate, a load exceedance warning signal may be output to a wind turbine monitoring system. This wind turbine monitoring system may be configured to monitor the condition of a fleet of wind turbines based at least in part on the output warning signal. This signal may be displayed to an operator that has control of at least one of the operational parameters of the wind turbine 1, or alternatively the signal may cause the wind turbine monitoring system itself to actively control one of the operational parameters of the wind turbine 1.

For example, the wind turbine monitoring system may form part of a controller for a wind turbine and the wind turbine controller may cause the wind turbine 1 to change the angle of attack of each of the wind turbine blades to reduce the rotational speed of the rotor 30, or it may cause the wind turbine to perform an emergency shutdown. It will be appreciated that the wind turbine controller may also be configured to execute other known wind turbine control procedures in response to an output signal indicating such a determination. Moreover, the controller may control the operational parameters of a plurality of wind turbines, or alternatively may control the operational parameters of just one wind turbine, for example the controller may form a part of such a wind turbine.

Alternatively, the data may be collected for later review and analysis in an "offline" mode. For example, the estimate of the edgewise load recurrence provided by the method could be used in the central validation or improvement in the modelling of the expected edgewise load data from aeroelastic simulations at the design stage of producing new wind turbines. In a further example, the estimates may be collected by a central data centre for the monitoring of the performance of a fleet of wind turbines or every wind turbine of a given type. Moreover, a speed sensor may be included in the rotor and/or one or more of the wind turbine blades of the wind turbine to determine the speed of the wind turbine blades during operation. Due to a resonance effect, the blade speed and 3p blade passing frequency of a wind turbine blade may contribute to the edgewise activity of that wind turbine blade and thus the edgewise load recurrence of the wind turbine blade. Accordingly, it may be desirable to measure the blade speed with a further sensor and to correlate the blade speed with the edgewise vibrational activity of the wind turbine blade.

The filtered gravitational load component of the edgewise load determined from the measurements may also be utilised, for example in the detecting of sensor drift in the one or more sensors that are used to measure the parameter associated with the edgewise load. Since the gravitational load component is driven by the gravitational force acting on the weight of the blade, with the pitch angle of the blade being taken into account, the amplitude of the gravitational load component would be expected to be very constant.

Accordingly, for a known pitch angle and blade weight of the one or more wind turbine blades the expected gravitational component of the edgewise load may be determined. This expected value can then be compared to the filtered gravitational component of the edgewise load signal and used to detect the sensor drift and correct the drift using a determined calibration offset for the sensor in question.

The controllers, functions and logic elements described herein may be implemented as hardware components or as software executing on one or more processors located at the wind turbines or remotely. The one or more processors may comprise one or more special purpose processing devices such as an application specific integrated circuit (ASIC), a field programmable gate array (FPGA), a digital signal processor (DSP), network processor, or other similar devices. The one or more processors are configured to perform the operations and methods described above, which may be carried out by a single processor or, alternatively, may be carried out by a number of processors connected together.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, or a floppy disk.

## Claims

1. A method for determining an edgewise load recurrence signal acting on a wind turbine blade, the method comprising:
obtaining, from at least one sensor, a plurality of measures of a parameter for deriving an edgewise load signal acting on the wind turbine blade;
deriving the edgewise load signals acting on the wind turbine blade based on each obtained measure of the parameter;
filtering the edgewise load signals to separate out frequency content of one or more edgewise components of the edgewise load signal to provide an edgewise component load signals;
identifying a peak edgewise component load signal of the edgewise component load signals derived from measures obtained within a given period of time;
repeating the above steps until a plurality of peak edgewise component load signals have been identified;
fitting the plurality of peak edgewise component load signals, identified from a plurality of periods of time, to a distribution function; and
extrapolating the fitted peak first edgewise components to estimate an edgewise load recurrence.

2. The method of claim 1, wherein the edgewise load recurrence is the recurrence for a given edgewise load or wherein the edgewise load recurrence is the estimated edgewise load for a given recurrence period.

3. The method of claim 2, further comprising filtering the edgewise load signals to separate out a derived gravitational component of each edgewise load signal and correlating the edgewise load recurrence with the gravitational component of the edgewise load signal and adding the correlated edgewise load recurrence to the gravitational component to determine an estimated absolute load recurrence.

4. The method of claim 2, further comprising determining an estimated extreme load recurrence by adding the estimated edgewise load recurrence to a maxima of the gravitational component of the edgewise load signal.

5. The method of any preceding claim, wherein the first edgewise component is a first edgewise Eigen mode of the edgewise load signal and filtering the edgewise load signal comprises using either a band stop filter, or a band pass filter, in particular a butter-worth filter.

6. The method of any preceding claim, further comprising obtaining, from a sensor configured to measure a blade speed of the at least one wind turbine blade, a blade speed signal; and wherein the estimated edgewise load recurrence is a function of the blade speed.

7. The method of any preceding claim, further comprising updating the distribution function based on the estimated edgewise load recurrence using Bayesian inference.

8. The method of any preceding claim, further comprising determining an expected gravitational component of the edgewise load signal based on a known weight of the at least one blade and a pitch angle of the at least one blade; comparing the expected gravitational component and the filtered gravitational component of the edgewise load signal; and determining a calibration offset of the at least one sensor.

9. The method of any preceding claim, wherein the at least one sensor, configured to measure the parameter for deriving the edgewise load signal, is configured to measure a bending movement at the root of the at least one wind turbine blade.

10. The method of any preceding claim, further comprising outputting a signal, based on the estimated edgewise load recurrence, to a wind turbine monitoring system.

11. The method of claim 10, wherein the wind turbine monitoring system is configured to monitor the condition of a fleet of wind turbines based, at least in part, on the output signal.

12. The method of claim 10 or 11, wherein the wind turbine monitoring system is further configured to output a load exceedance warning signal based, at least in part, on the output signal.

13. The method of any of claims 10 to 12, wherein the wind turbine monitoring system is further configured to control an operational variable of one or more wind turbines based, at least in part, on the output signal.

14. A controller for a wind turbine having at least one wind turbine blade having at least one sensor configured to measure a parameter for deriving an edgewise load signal of the at least one wind turbine blade, wherein the controller is configured to cause the method of any of claims 1 to 13 to be implemented.

15. A computer program that, when executed on a wind turbine controller, causes the wind turbine controller to carry out the method of any of claims 1 to 13.

## Patentansprüche

1. Verfahren zum Bestimmen eines Hochkant-Lastwiederholungssignals, das auf ein Windkraftanlagenblatt einwirkt, wobei das Verfahren umfasst:
Erhalten einer Vielzahl von Messungen eines Parameters zum Ableiten eines Hochkant-Lastsignals, das auf das Windkraftanlagenblatt einwirkt, von mindestens einem Sensor;
Ableiten des Hochkant-Lastsignals, das auf das Windkraftanlagenblatt einwirkt, basierend auf jeder erhaltenen Messung des Parameters;
Filtern des Hochkant-Lastsignals, um einen Frequenzgehalt aus einer oder mehreren Hochkant-Komponenten des Hochkant-Lastsignals herauszutrennen, um ein Hochkant-Komponentenlastsignal bereitzustellen;
Identifizieren eines Hochkant-Komponenten-Spitzenlastsignals der Hochkant-Komponentenlastsignale, das von den innerhalb eines festgelegten Zeitraums erhaltenen Messungen abgeleitet ist;
Wiederholen der oben genannten Schritte, bis eine Vielzahl von Hochkant-Komponenten-Spitzenlastsignalen identifiziert worden ist;
Anpassen der Vielzahl von Hochkant-Komponenten-Spitzenlastsignalen, die aus einer Vielzahl von Zeiträumen identifiziert worden ist, an eine Verteilungsfunktion; und
Hochrechnen der ersten angepassten Hochkant-Spitzenkomponenten, um eine Hochkant-Lastwiederholung zu schätzen.

2. Verfahren nach Anspruch 1, wobei die Hochkant-Lastwiederholung die Wiederholung für eine bestimmte Hochkantlast ist, oder wobei die Hochkant-Lastwiederholung die geschätzte Hochkantlast für einen bestimmten Wiederholungszeitraum ist.

3. Verfahren nach Anspruch 2, weiter umfassend das Filtern der Hochkant-Lastsignale, um eine abgeleitete Gravitationskomponente von jedem Hochkant-Lastsignal herauszutrennen und das Korrelieren der Hochkant-Lastwiederholung mit der Gravitationskomponente des Hochkant-Lastsignals und das Hinzufügen der korrelierten Hochkant-Lastwiederholung zu der Gravitationskomponente, um eine geschätzte absolute Lastwiederholung zu bestimmen.

4. Verfahren nach Anspruch 2, weiter umfassend das Bestimmen einer geschätzten extremen Lastwiederholung durch Hinzufügen der geschätzten Hochkant-Lastwiederholung zu einem Maximum der Gravitationskomponente des Hochkant-Lastsignals.

5. Verfahren nach einem der vorstehenden Ansprüche, wobei die erste Hochkantkomponente ein erster Hochkant-Eigen-Modus des Hochkant-Lastsignals ist und das Filtern des Hochkant-Lastsignals die Verwendung von entweder einem Bandsperrfilter oder einem Bandpassfilter, insbesondere einem Butterworth-Filter, umfasst.

6. Verfahren nach einem der vorstehenden Ansprüche, weiter umfassend das Erhalten eines Blattgeschwindigkeitssignals von einem Sensor, der konfiguriert ist, eine Blattgeschwindigkeit von dem mindestens einen Windkraftanlagenblatt zu messen; und wobei die geschätzte Hochkant-Lastwiederholung eine Funktion der Blattgeschwindigkeit ist.

7. Verfahren nach einem der vorstehenden Ansprüche, weiter umfassend das Aktualisieren der Verteilungsfunktion, basierend auf der geschätzten Hochkant-Lastwiederholung, unter Verwendung der Bayeschen Wahrscheinlichkeitstheorie.

8. Verfahren nach einem der vorstehenden Ansprüche, weiter umfassend das Bestimmen einer erwarteten Gravitationskomponente des Hochkant-Lastsignals, basierend auf einem bekannten Gewicht des mindestens einen Blatts und einem Blattwinkel des mindestens einen Blatts; das Vergleichen der erwarteten Gravitationskomponente und der gefilterten Gravitationskomponente des Hochkant-Lastsignals; und das Bestimmen eines Kalibrierversatzes des mindestens einen Sensors.

9. Verfahren nach einem der vorstehenden Ansprüche, wobei der mindestens eine Sensor, der konfiguriert ist, den Parameter zum Ableiten des Hochkant-Lastsignals zu messen, derart konfiguriert ist, eine Biegebewegung an der Wurzel des mindestens einen Windkraftanlagenblatts zu messen.

10. Verfahren nach einem der vorstehenden Ansprüche, weiter umfassend das Ausgeben eines Signals, basierend auf der geschätzten Hochkant-Lastwiederholung, an ein Windkraftanlagen-Überwachungssystem.

11. Verfahren nach Anspruch 10, wobei das Windkraftanlagen-Überwachungssystem konfiguriert ist, den Zustand einer Flotte von Windkraftanlagen, zumindest teilweise basierend auf dem Ausgangssignal, zu überwachen.

12. Verfahren nach Anspruch 10 oder 11, wobei das Windkraftanlagen-Überwachungssystem weiter konfiguriert ist, ein Lastüberschreitungs-Warnsignal, zumindest teilweise basierend auf dem Ausgangssignal, auszugeben.

13. Verfahren nach einem der Ansprüche 10 bis 12, wobei das Windkraftanlagen-Überwachungssystem weiter konfiguriert ist, eine Betriebsvariable von einer oder mehreren Windkraftanlagen, zumindest teilweise basierend auf dem Ausgangssignal, zu steuern.

14. Steuerung für eine Windkraftanlage, die mindestens ein Windkraftanlagenblatt aufweist, das mindestens einen Sensor aufweist, der konfiguriert ist, einen Parameter zum Ableiten eines Hochkant-Lastsignals des mindestens einen Windkraftanlagenblatts zu messen, wobei die Steuerung konfiguriert ist, das Implementieren des Verfahrens nach einem der Ansprüche 1 bis 13 zu bewirken.

15. Computerprogramm das, wenn an einer Windkraftanlagensteuerung ausgeführt, bewirkt, dass die Windkraftanlagensteuerung das Verfahren nach einem der Ansprüche 1 bis 13 ausführt.

## Revendications

1. Procédé pour déterminer un signal de récurrence de charge dans la direction longitudinale du profil agissant sur une pale d'éolienne, le procédé comprenant :
l'obtention, à partir d'au moins un capteur, d'une pluralité de mesures d'un paramètre pour dériver un signal de charge dans la direction longitudinale du profil agissant sur la pale d'éolienne ;
la dérive des signaux de charge dans la direction longitudinale du profil agissant sur la pale d'éolienne sur la base de chaque mesure obtenue du paramètre ;
le filtrage des signaux de charge dans la direction longitudinale du profil pour séparer un contenu de fréquence d'une ou plusieurs composantes dans la direction longitudinale du profil du signal de charge dans la direction longitudinale du profil pour fournir un signal de charge de composante dans la direction longitudinale du profil ;
l'identification d'un signal de charge de composante dans la direction longitudinale du profil de pic des signaux de charge de composante dans la direction longitudinale du profil à partir de mesures obtenues dans une période de temps donnée ;
la répétition des étapes ci-dessus jusqu'à ce qu'une pluralité de signaux de charge de composante dans la direction longitudinale du profil de pic aient été identifiés ;
l'ajustement de la pluralité de signaux de charge de composante dans la direction longitudinale du profil de pic, identifiés à partir d'une pluralité de périodes de temps, à une fonction de distribution ; et
l'extrapolation des premières composantes dans la direction longitudinale du profil de pic ajustées pour estimer une récurrence de charge dans le sens de la traînée.

2. Procédé selon la revendication 1, dans lequel la récurrence de charge dans la direction longitudinale du profil est la récurrence pour une charge dans la direction longitudinale du profil donnée ou dans lequel la récurrence de charge dans la direction longitudinale du profil est la charge dans la direction longitudinale du profil estimée pour une période de récurrence donnée.

3. Procédé selon la revendication 2, comprenant en outre le filtrage des signaux de charge dans la direction longitudinale du profil pour séparer une composante gravitationnelle dérivée de chaque signal de charge dans la direction longitudinale du profil et la corrélation de la récurrence de charge dans la direction longitudinale du profil avec la composante gravitationnelle du signal de charge dans la direction longitudinale du profil et l'ajout de la récurrence de charge dans la direction longitudinale du profil corrélée à la composante gravitationnelle pour déterminer une récurrence de charge absolue estimée.

4. Procédé selon la revendication 2, comprenant en outre la détermination d'une récurrence de charge extrême estimée en ajoutant la récurrence de charge dans la direction longitudinale du profil estimée à un maximum de la composante gravitationnelle du signal de charge dans le sens de la traînée.

5. Procédé selon une quelconque revendication précédente, dans lequel la première composante dans la direction longitudinale du profil est un premier mode propre dans la direction longitudinale du profil du signal de charge dans la direction longitudinale du profil et le filtrage du signal de charge dans la direction longitudinale du profil comprend l'utilisation d'un filtre coupe-bande, ou d'un filtre passe-bande, en particulier d'un filtre de Butterworth.

6. Procédé selon une quelconque revendication précédente, comprenant en outre l'obtention, à partir d'un capteur configuré pour mesurer une vitesse de pale de l'au moins une pale d'éolienne, un signal de vitesse de pale ; et dans lequel la récurrence de charge dans la direction longitudinale du profil estimée est une fonction de la vitesse de pale.

7. Procédé selon une quelconque revendication précédente, comprenant en outre la mise à jour de la fonction de distribution sur la base de la récurrence de charge dans la direction longitudinale du profil estimée à l'aide d'une inférence bayésienne.

8. Procédé selon une quelconque revendication précédente, comprenant en outre la détermination d'une composante gravitationnelle attendue du signal de charge dans la direction longitudinale du profil sur la base d'un poids connu de l'au moins une pale et d'un angle de calage de l'au moins une pale; la comparaison de la composante gravitationnelle attendue et de la composante gravitationnelle filtrée du signal de charge dans la direction longitudinale du profil ; et la détermination d'un décalage d'étalonnage de l'au moins un capteur.

9. Procédé selon une quelconque revendication précédente, dans lequel l'au moins un capteur, configuré pour mesurer le paramètre pour dériver le signal de charge dans le sens de la traînée, est configuré pour mesurer un déplacement de flexion au niveau du pied de l'au moins une pale d'éolienne.

10. Procédé selon une quelconque revendication précédente, comprenant en outre la délivrance d'un signal, sur la base de la récurrence de charge dans la direction longitudinale du profil estimée, sur un système de surveillance d'éolienne.

11. Procédé selon la revendication 10, dans lequel le système de surveillance d'éolienne est configuré pour surveiller l'état d'un parc d'éoliennes sur la base, au moins en partie, du signal de délivrance.

12. Procédé selon la revendication 10 ou 11, dans lequel le système de surveillance d'éolienne est en outre configuré pour délivrer un signal d'avertissement de dépassement de charge sur la base, au moins en partie, du signal de délivrance.

13. Procédé selon l'une quelconque des revendications 10 à 12, dans lequel le système de surveillance d'éolienne est en outre configuré pour commander une variable fonctionnelle d'une ou plusieurs éoliennes sur la base, au moins en partie, du signal de délivrance.

14. Dispositif de commande pour une éolienne présentant au moins une pale d'éolienne présentant au moins un capteur configuré pour mesurer un paramètre pour dériver un signal de charge dans la direction longitudinale du profil de l'au moins une pale d'éolienne, dans lequel le dispositif de commande est configuré pour entraîner la mise en œuvre du procédé selon l'une quelconque des revendications 1 à 13.

15. Programme informatique qui, lorsqu'il est exécuté sur un dispositif de commande d'éolienne, amène le dispositif de commande d'éolienne à réaliser le procédé selon l'une quelconque des revendications 1 à 13.
